# EUROPEAN PATENT SPECIFICATION

(11) **EP 2 189 333 B1**
(45) Date of publication and mention of the grant of the patent: **21.08.2013**
(21) Application number: 09176009.0
(22) Date of filing: 13.11.2009
(51) Int. Cl.: B60R 9/10

(54) **Securing device for bicycle racks**
Sicherungsvorrichtung für Fahrradständer
Dispositif de sécurité pour paniers de bicyclette

(30) Priority: 19.11.2008 TW 97144609
(43) Date of publication of application: 26.05.2010
(73) Proprietor: Wang, Chiu-Kuei, Taichung County (TW)
(72) Inventor: Wang, Chiu-Kuei, Taichung County (TW)
(74) Representative: Chaillot, Geneviève

(56) References cited:
- DE-U1- 9 116 165
- US-A1- 2004 256 429
- US-A1- 2007 012 634

## Description

The present invention relates to a bicycle rack which is connected to the hitch ball of a vehicle, and more particularly, to a securing device for bicycle rack and the securing device avoid the bicycle rack from shaking.

### BACKGROUND OF THE INVENTION

A conventional bicycle rack can be connected to a hitch ball on rear end of a vehicle and generally includes several fastening members which secure the bicycles on the bicycle rack so that the users can carry their bicycles on the vehicle to remote destinations.

A conventional bicycle rack known to applicant includes two rods, two expanding plates, a folding member, a clamping member and a locking unit. The two expanding plates are pivotably connected between the two rods and the locking device. The two rods are pivotably connected to the folding member so that the two respective lower ends of the two rods can be pivoted about the folding member which is located above the clamping member. The clamping member includes a spherical space for accommodating the hitch ball. The locking unit includes a frame, an engaging shaft, a spring and a U-shaped collar, wherein the frame has one end pivotably connected with the first expanding plate and a center pivotably connected with the second expanding plate, and the other end of the frame is pivotably connected with the engaging shaft. The engaging shaft is located in alignment with the curved slot in the second expanding plate. By pressing the engaging shaft, the engaging shaft can be disengaged from the curved slot and the two expanding plates are able to be pivoted to each other.

Another conventional bicycle rack known to applicant includes a fastening device which is connected to the lower end of one of the two rods so that the fastening device users a restriction collar which is pivotably connected to one of the rods and hooks to a plate on the other rod. A locking bolt extends through the restriction collar to securely connect the restriction collar on the rod. The fastening device makes the clamping member securely clamp the hitch ball so that the bicycle rack does not shake or loose.

Besides, the two rods each have a support rod such that the bicycle frames are supported on the support arms, however, the support arms usually are integrally connected to the rods and cannot be folded. Some manufacturers provide a positioning device between the support arms and the rods so that the support arms can be set at desired angles.

The first conventional bicycle rack is operated by pressing the engaging shaft and lifting the frame upward so that the two expanding plates can be pivoted. However, the frame is not easily held firmly and the engaging shaft usually is stocked in the curved slot, the user has to take a while to operated the locking unit. The two support arms are fixed to the rods for the second conventional bicycle rack and the support arms occupy space which requires a longer space when the vehicle parks. If the support arms are cooperated with positioning devices to be foldable, the parts for the positioning devices have to be manufactured at high cost so as to ensure that the support arms are strong and secured enough to support the bicycles

US 2004/256429 A1 discloses a bicycle rack according to the preambles of claims 1 to 3, and which includes two rods with two plates pivotably connected therebetween and a secure device connecting the two plates and including a locking member with a latch which extends through the body of the secure device and is engaged with two aligned apertures respectively defined through the two plates. The locking member is controlled by a lock device so that the latch is not disengaged form the apertures of the plates unintentionally. An operation member is connected to one of the two rods and a locking ring is connected to the other rod so as to be hooked on the operation member to clamp the two clamping members together to securely clamp the spherical receiver between the clamping members.

The present invention intends to provide a securing device for bicycle racks and the support arms are foldable and include a simple structure to ensure the bicycles are well supported. The expanding plates are cooperated with an operation unit which is able to be expanded and folded quickly and conveniently. The clamping unit is clamped by a restriction member so that the bicycle rack does not shake relative to the hitch ball.

### SUMMARY OF THE INVENTION

The present invention relates to a bicycle rack and comprises a fist rod and a second rod whose lower end is pivotably connected to the lower end of the first rod. A first plate and a second plate are pivotably connected to each other and connected between the first and second rods. A clamping unit is connected to the two respective lower ends of the first and second rods. The clamping unit includes two clamping members on the first and second rods respectively. A U-shaped member is fixed to the second rod and a U-shaped restriction member has two extension legs thereof pivotably connected to two ends of the U-shaped member. A locking member connects the restriction member to the first rod. The first rod includes a nut connected thereto and the locking member is threadedly connected to the nut. Two support arms are respectively connected to the first and second rods.

An operation unit includes a handle having a first end connected to the first plate, an extension is connected to a second end of the handle and a space is defined between the extension and the first plate. An operation pin extends through a part of the extension and a spring is mounted to the operation pin and located in the space. The operation pin extends through the first plate and the second plate. The operation pin is pulled to disengage from the second plate and allows the first and second plates to be pivotable to each other by lifting the handle.

Two folding units are respectively connected to the first and second rods and each folding unit includes a mounting member and a resilient member, wherein each mounting member is connected to the support arm corresponding thereto and includes two slots defined through two facing sidewalls thereof. A pin extends through the two slots and the first/second rod. The two resilient members each are a U-shaped member and include two protrusions on two ends thereof. The two resilient members are received in the first and second rods respectively and the protrusions protrude through the first/second rod and the mounting member. The two protrusions are pushed inward to disengage from the first/second rod and the mounting member such that the support arm is pivotable.

The primary object of the present invention is to provide a clamping unit for a bicycle rack wherein the locking member extends through the restriction member of the clamping unit and is fixed to a nut, and the restriction member is connected with the U-shaped member so that the clamping members located between the two rods securely clamp the hitch ball.

Another object of the present invention is to provide an operation unit which is connected to the first and second plates pivotably connected between the first and second rods. The first and second plates can only be pivoted when the user operates the operation unit.

Yet another object of the present invention is to provide tow folding units which are respectively connected to the two support arms and are positioned by two locking bolts. By loosening the locking bolts, the folding units together with the support arms can be folded.

An object of the invention is a bicycle rack comprising:
a fist rod and a second rod whose lower end is pivotably connected to the lower end of the first rod;
first and second plates pivotably connected to each other and pivotably connected between the first and second rods;
a clamping unit connected to the two respective lower ends of the first and second rods, the clamping unit including clamping members on the first and second rods respectively, a U-shaped member fixed to the second rod and a U-shaped restriction member having two extension legs thereof pivotably connected to two ends of the U-shaped member, a locking member extending through restriction member and connecting the restriction member to the first rod, the first rod including a nut connected thereto and the locking member being threadedly connected to the nut, and
two support arms respectively connected to the first and second rods.

Another object of the invention is a bicycle rack comprising:
a fist rod and a second rod whose lower end is pivotably connected to the lower end of the first rod;
first and second plates pivotably connected to each other and pivotably connected between the first and second rods;
an operation unit including a handle having a first end connected to the first plate, an extension connected to a second end of the handle and a space defined between the extension and the first plate, an operation pin extending through a part of the extension and a spring mounted to the operation pin and located in the space, the operation pin extending through the first plate and the second plate, the operation pin being pulled to be disengaged from the second plate and allowing the first and second plates to be pivotable to each other by lifting the handle;
a clamping unit connected to the two respective lower ends of the first and second rods, the clamping unit adapted to clamp a hitch ball, and
two support arms respectively connected to the first and second rods.

Another object of the invention is a bicycle rack comprising:
a fist rod and a second rod whose lower end is pivotably connected to the lower end of the first rod;
first and second plates pivotably connected to each other and pivotably connected between the first and second rods;
a clamping unit connected to the two respective lower ends of the first and second rods, the clamping unit adapted to clamp a hitch ball;
two support arms respectively connected to the first and second rods, and
two folding units respectively connected to the first and second rods and each folding unit including a mounting member and a resilient member, each of the mounting members connected to the support arm corresponding thereto and including two slots defined through two facing sidewalls thereof and a pin extending through the two slots and the first/second rod, the two resilient members each being a U-shaped member and including two protrusions on two ends thereof, the two resilient members received in the first and second rods respectively and the protrusions protruding through the first/second rod and the mounting member, the two protrusions being pushed inward so as to disengage from the first/second rod and the mounting member such that the support arm is pivotable.

Preferably, a center of the nut is located below a center of each of the clamping members.

Preferably, the handle is a U-shaped arm and the extension is an L-shaped plate which includes a horizontal portion and a vertical portion, the second end of the handle is connected to the horizontal portion and the space is defined between the vertical portion of the extension and the first plate, the vertical portion includes a passage and the operation pin extends through the passage.

Preferably, the operation pin includes a head and a distal end, a groove is defined annularly in an outer surface of the operation pin, a C-shaped clip is engaged with the groove so that the operation pin is connected between the second plate and the vertical portion of the extension.

Preferably, the resilient member is a U-shaped member and the two protrusions protrude outward from two outside thereof.

Preferably, the mounting member includes a connection hole defined through the two facing sidewalls thereof and each of the first and second rods includes first and second holes, the protrusions extend through the connection hole and one of the first and second holes.

Preferably, the mounting member includes two lugs extend from the two facing sidewalls and the two slots are defined through the two lugs, the pin extends through the two slots and the first/second rod.

Preferably, the mounting member includes a recess defined in the other two facing sidewalls and a locking bolt extends through the first/second rod and engaged with the recess such that the mounting member is not pivotable relative to the first/second rod.

Preferably, the locking bolt includes a shank and an engaging portion which is engaged with the recess.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle rack of the present invention;
Fig. 2 is an exploded view to show the operation unit and the bicycle rack of the present invention;
Fig. 3 is a side view to show the clamping unit connected to the bicycle rack of the present invention;
Fig. 4 is an exploded view to show the folding unit and the bicycle rack of the present invention;
Fig. 5A shows that the bicycle rack is to be connected to the hitch ball;
Fig. 5B shows that the bicycle rack is connected to the hitch ball;
Fig. 6A shows that the operation unit is connected to the first and second plates;
Fig. 6B shows that the operation pin is pulled outward to allow the first and second plates to be pivotable;
Fig. 7A shows that the hitch ball is to be clamped by the clamping members of the clamping unit;
Fig. 7B shows that the two clamping members are to be moved toward each other to clamp the hitch ball;
Fig. 7C shows that the two clamping members clamp the hitch ball and the restriction member is pivoted upward;
Fig. 7D shows that the hitch ball is clamped by the two clamping members and the locking member is to be threadedly connected to the nut;
Fig. 7E shows that the hitch ball is clamped by the two clamping members and the locking member is threadedly connected to the nut;
Fig. 8A shows that the mounting member is mounted to the rod and the pin is located at the upper position in the slot;
Fig. 8B shows that the locking bolt is loosened to remove the engaging portion from the recess of mounting member;
Fig. 8C shows that the mounting member is lifted to disengage the shank of the locking bolt from the recess;
Fig. 8D shows that the mounting member is pivotable relative to the rod;
Fig. 9A shows that the two protrusions of the resilient member are to be pushed inward;
Fig. 9B shows that the two protrusions of the resilient member are pushed inward to disengage from the connection holes of the mounting member;
Fig. 10A shows a side view of the bicycle rack of the present invention;
Fig. 10B shows that the mounting member and the support arm are pivoted toward the rod, and
Fig. 11 shows the bicycle rack of the present invention is connected to the rear end of a vehicle.

### DETAILED DESCRIPTION OF THE PREFERRED EMBODIMENT

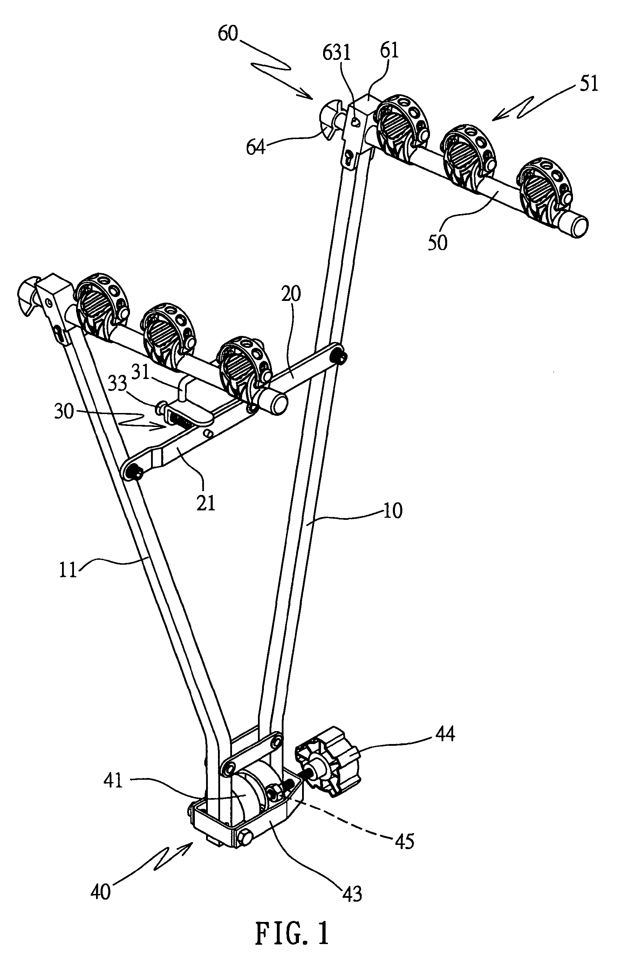

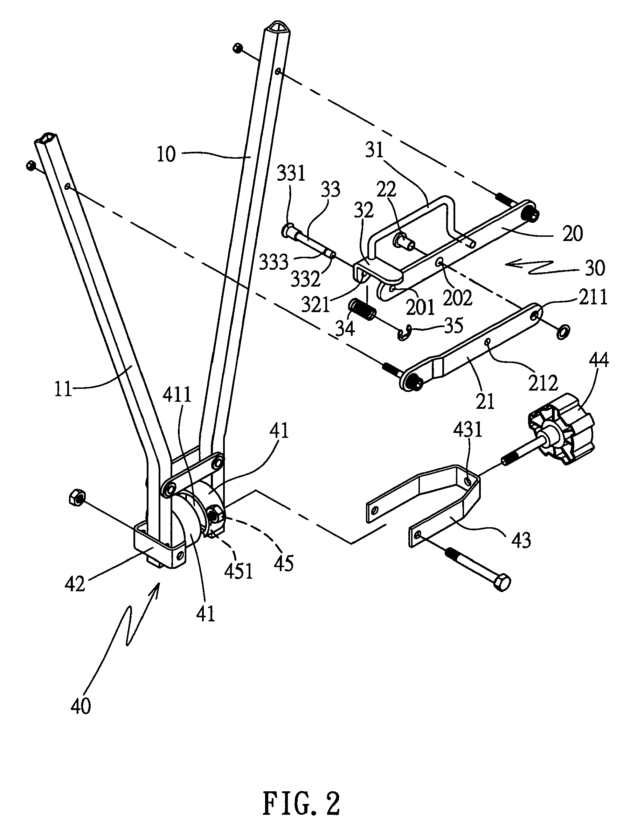

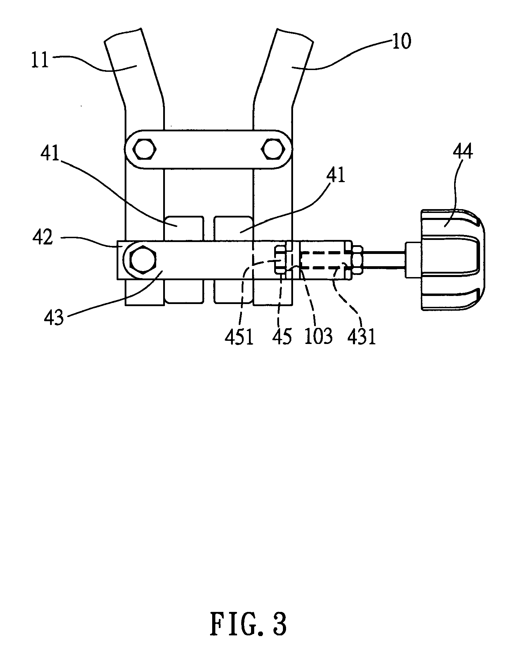

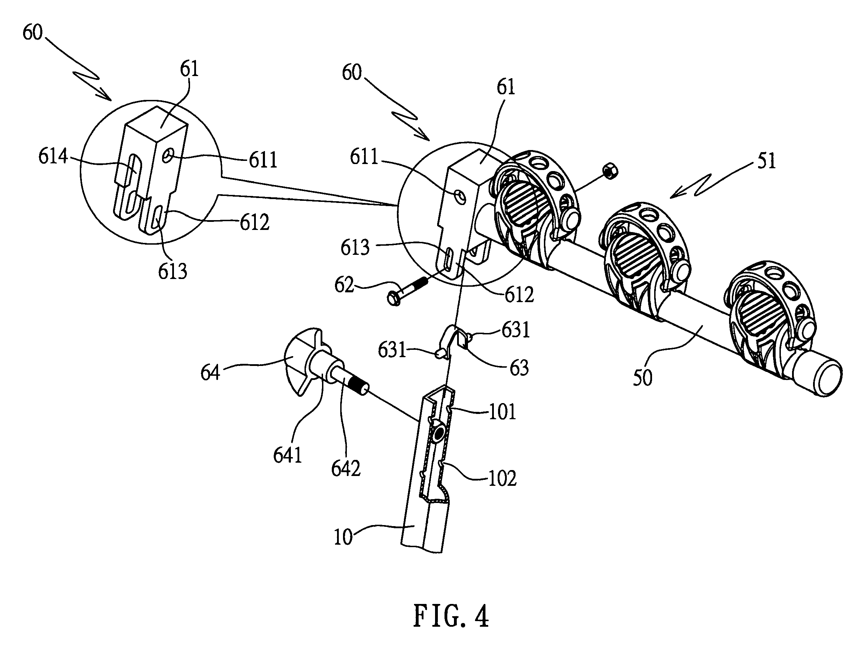

Referring to Figs. 1 to 4, the bicycle rack of the present invention comprises a fist rod 10 and a second rod 11 whose lower end is pivotably connected to the lower end of the first rod 10.

A first plate 20 and a second plate 21 are pivotably connected to each other. The first plate 20 includes first and second apertures 201, 202, and the second plate 21 includes first and second bores 211, 212. A pin 22 extends through the second aperture 201 and the second bore 212 to pivotably connect the first and second plates 20, 21. The two respective distal ends of the first and second plates 20, 21 are pivotably connected between the first and second rods 10, 11.

An operation unit 30 is connected to the first and second plates 20, 21 and includes a handle 31 which has a first end connected to the first plate 20 and an extension 32 is connected to a second end of the handle 31. The extension 32 is an L-shaped plate which includes a horizontal portion and a vertical portion. The second end of the handle 31 is connected to the horizontal portion and a space is defined between the vertical portion of the extension 32 and the first plate 20. The vertical portion 32 includes a passage 321 and an operation pin 33 extends through the passage 321 and a spring 34 mounted to the operation pin 33 and located in the space. The operation pin 33 includes a head 331 and a distal end 332. The distal end 332 of the operation pin 33 extends through the passage 321, the first aperture 201 and the second bore 212. A groove 333 is defined annularly in an outer surface of the operation pin 33 and a C-shaped clip 35 is engaged with the groove 333 so that the spring 34 is biased between the C-shaped clip 35 and the vertical portion of the extension 32. The operation pin 33 is connected between the second plate 21 and the vertical portion of the extension 32.

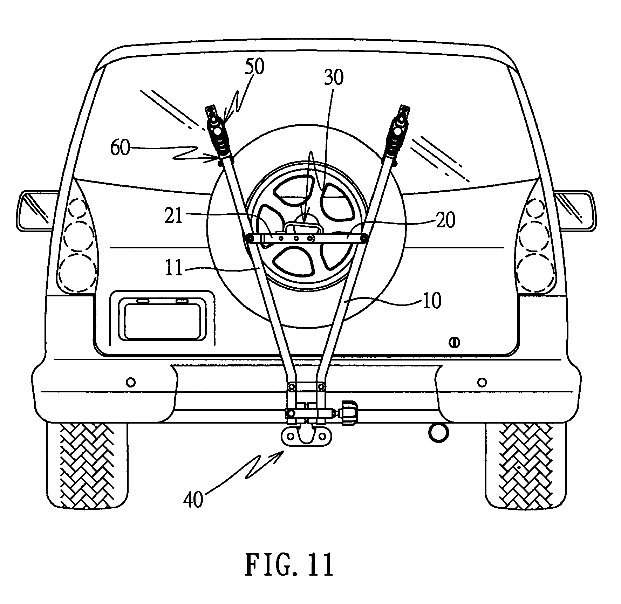

Further referring to Fig. 11, a clamping unit 40 is connected to the two respective lower ends of the first and second rods 10, 11 and includes two clamping members 41 on the first and second rods 10, 11 respectively. A clamping space 411 is formed between the two clamping members 41 so as to clamp the hitch ball 70 in the clamping space 411. A U-shaped member 42 is fixed to the second rod 11 and a U-shaped restriction member 43 has two extension legs thereof pivotably connected to two ends of the U-shaped member 42. A locking member 44 extends through a through hole 431 defined in the restriction member 43 and connects the restriction member 43 to the first rod 10. The first rod 10 includes a nut 45 connected thereto and a threaded hole 451 is defined centrally through the nut 45, the locking member 44 extends through a side hole 103 in the first rod 10 and is threadedly connected to the threaded hole 451 of the nut 45. It is noted that the threaded hole 451 of the nut 45 is located below a center of each of the clamping members 41, so that when the locking member 44 is connected to the threaded hole 451, the two clamping members 41 slightly swing an angle and can firmly clamp the hitch ball 70.

Two folding units 60 are respectively connected to the first and second rods 10, 11 and each folding unit 60 includes a mounting member 61 and a resilient member 63. Each of the mounting members 61 is connected to the support arm 50 corresponding thereto and includes two lugs 612 extending from two facing sidewalls thereof and each lug 612 includes a slot 613 defined therethrough. The two support arms 50 each have multiple fastening members 51 so as to secure the bicycle frames (not shown) supported on the support arms 50. The mounting member 61 further includes a recess 614 defined in the other two facing sidewalls. A pin 62 extends through the two slots 613 and the first/second rod 10/11.

The two resilient members 63 each are a U-shaped member and include two protrusions 631 on two ends thereof. The mounting member 61 includes a connection hole 611 defined through the two facing sidewalls thereof and each of the first and second rods 10, 11 includes first and second holes 101, 102. The two resilient members 63 are received in the first and second rods 10, 11 respectively and the protrusions 631 protrude through the connection hole 611 and one of the first and second holes 101, 102.

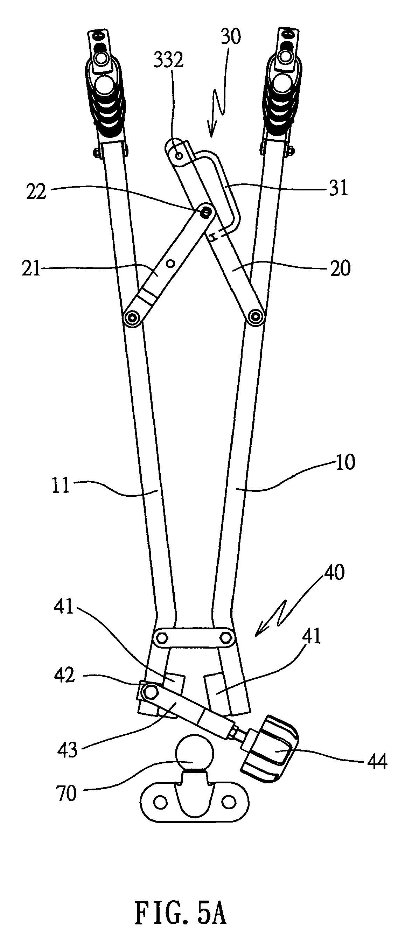

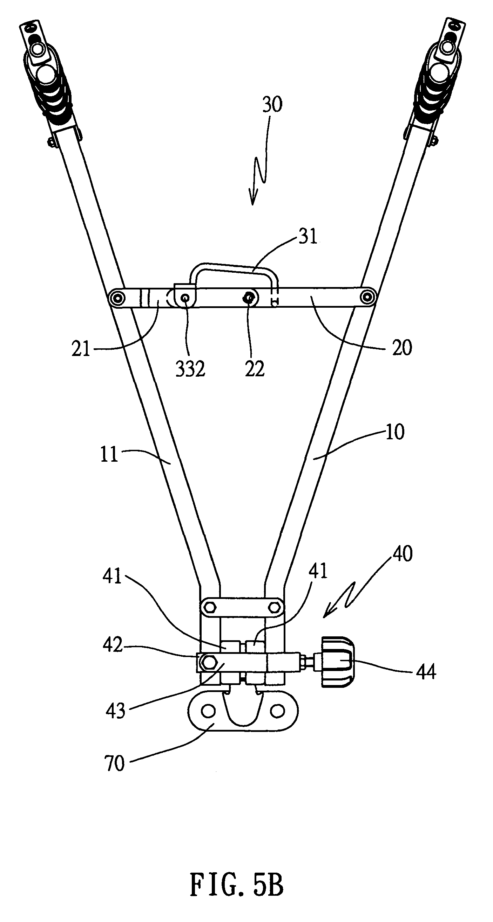

As shown in Figs. 5A and 5B, when installing the bicycle rack to the hitch ball 70, the restriction member 43 is not connected to the first rod 10 and the hitch ball 70 can be easily positioned between the two clamping members 41. The tow plates 20, 21 are then expanded to move the two clamping members 41 to clamp the hitch ball 70.

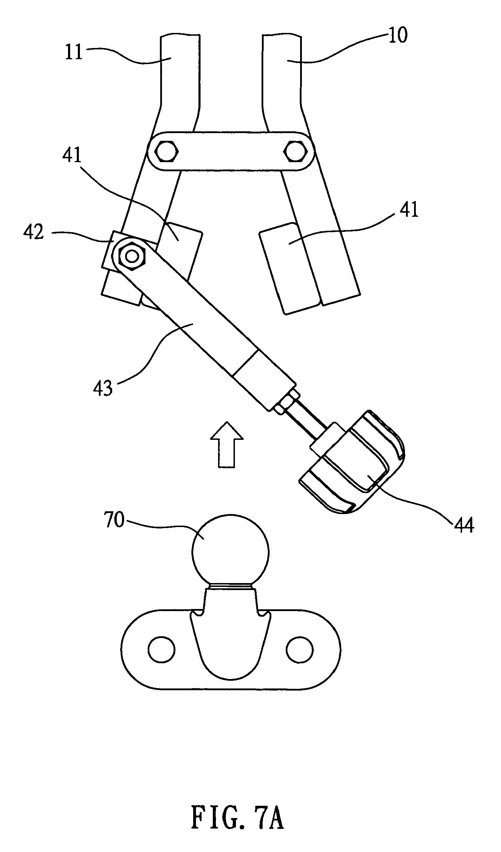

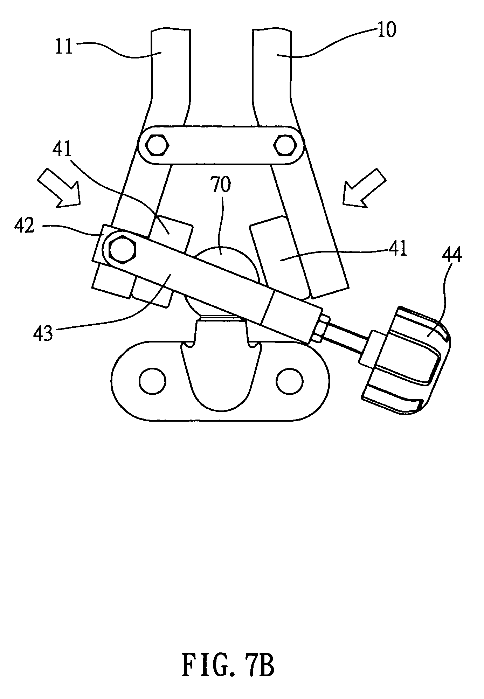

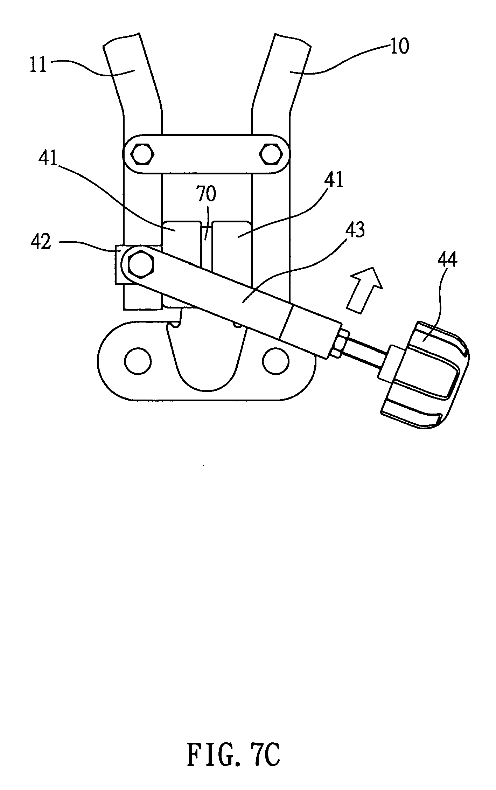

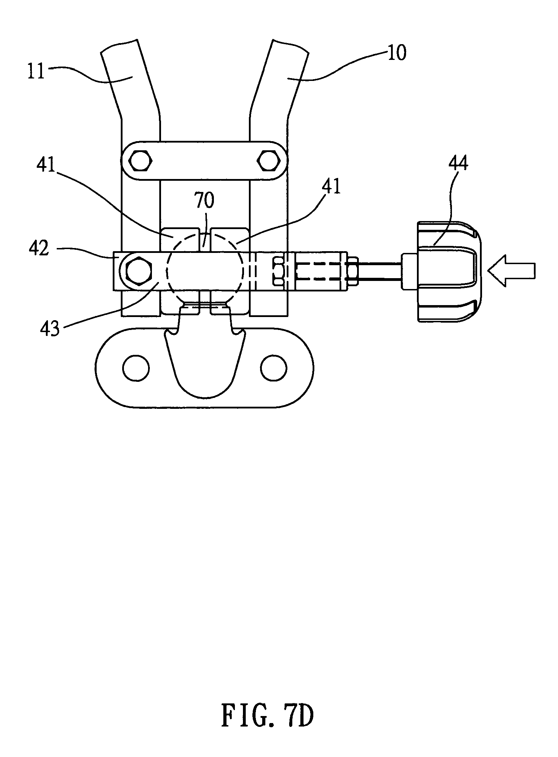

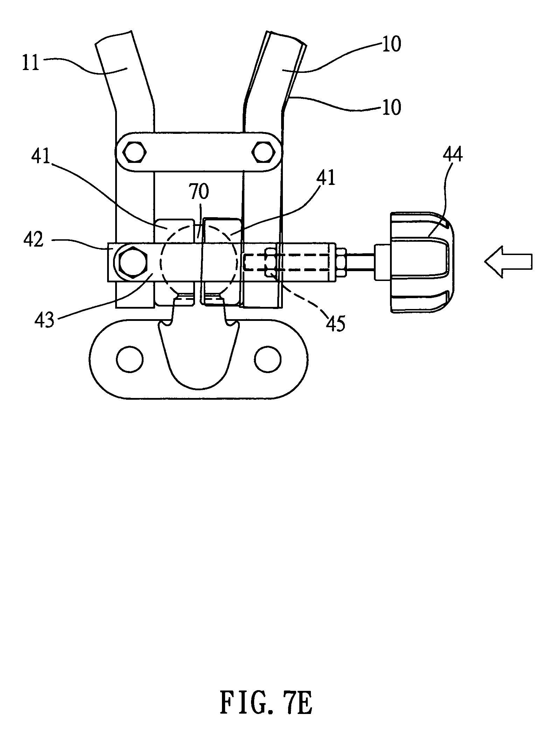

As shown in Figs. 7A to 7E, when the bitch ball 70 is located between the two clamping members 41, the restriction member 43 is pivoted upward and the locking member 44 extends through the through hole 431 and the side hole 103 and is connected to the nut 45. By this way, the two lower ends of the first and second rods 10, 11 are restricted together and the hitch ball 70 is firmly clamped between the two clamping members 41. This ensures that the bicycle rack does not shake relative to the hitch ball 70.

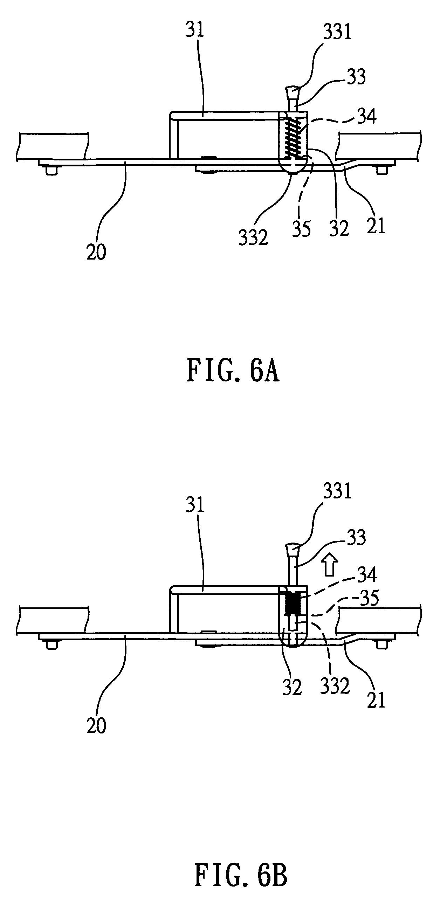

As shown in Figs. 6A and 6B, the user can pulls the head 331 of the operation pin 33 to compress the spring 34 such that the first and second plates 20, 21 can be pivoted to expanded position and then the operation pin 33 is released to extend through the first aperture 201 and the second bore 212 such that the first and second plates 20, 21 will not pivoted accidentally.

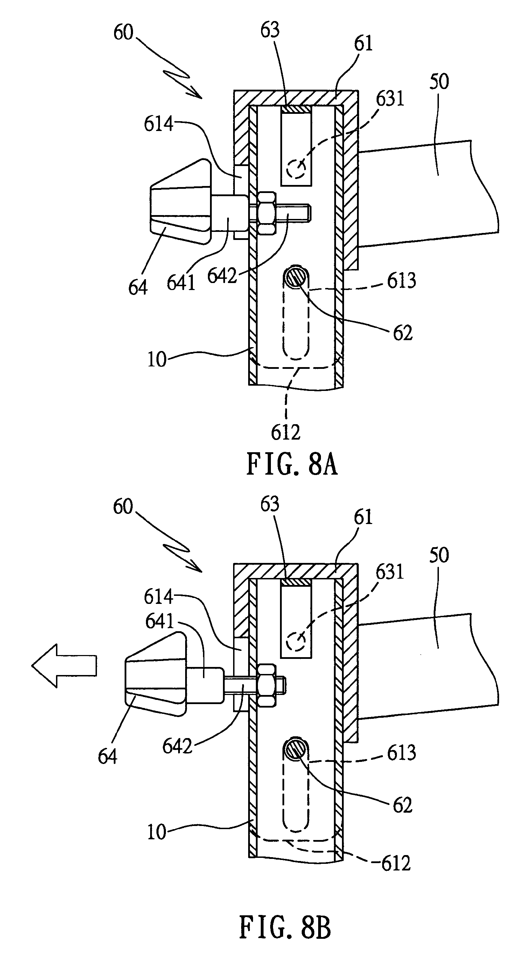

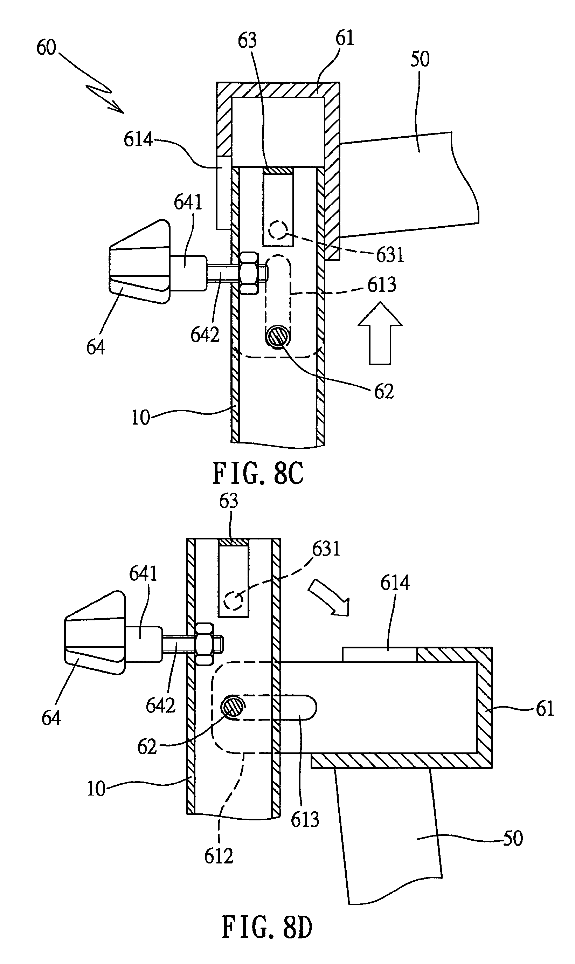

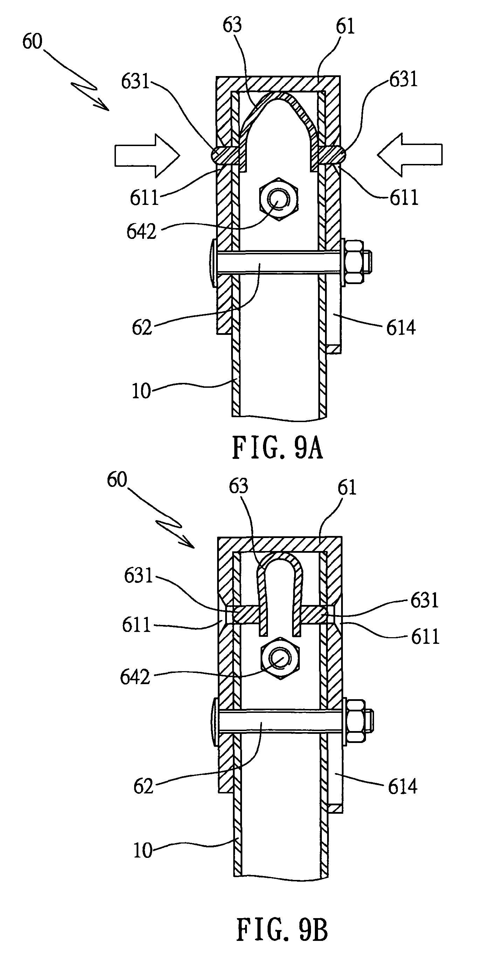

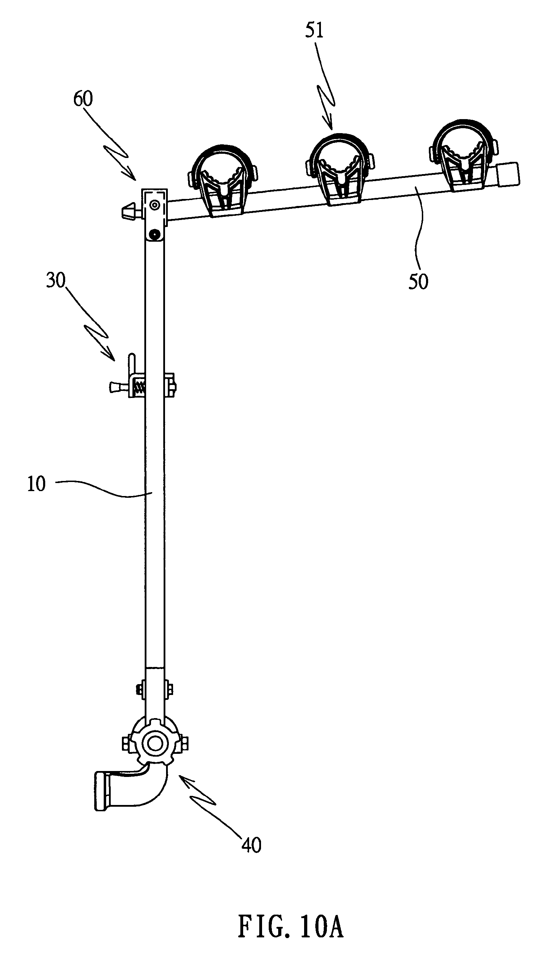

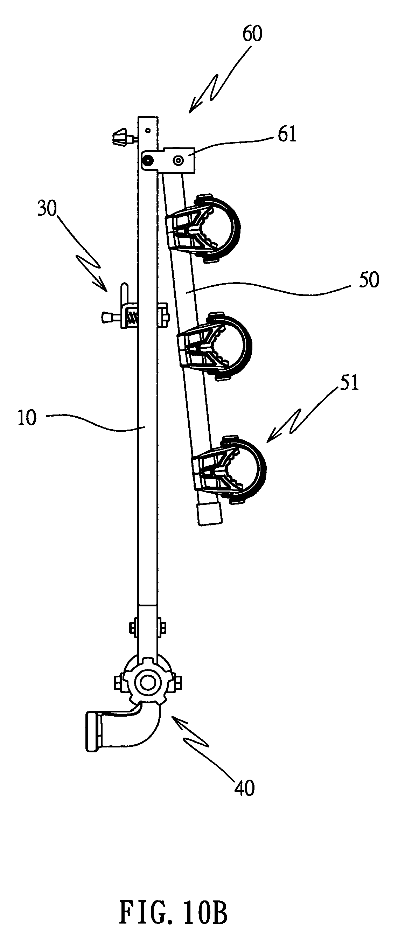

Referring to Figs. 8A to 8D and Figs. 9A to 9B, when the support arms 50 are in their use position as shown in Fig. 10A, the pin 62 is located at the upper position in the slots 613 and the engaging portion 641 of the locking bolt 64 is engaged with the recess 614 of the mounting member 61. When folding the support arms 50, further referring to Fig. 10B, the locking bolt 64 is first loosened from the nut located in the first/second rod 10/11, and the engaging portion 641 is moved outward to disengage from the recess 614. The two protrusions 631 are then pushed inward and disengaged from the first hole 101. The mounting member 61 is able to be lifted and the pin 62 is moved to the lower position of the slot 613. The mounting member 61 and the support arm 50 are then be pivoted toward the first/second rod 10/11.

When expanding the support arms 50, the above mentioned steps are operated in reverse sequences and when the mounting member 61 is mounted to the first/second rod 10/11, the resilient member 63 bounces back to protrude the protrusions 631 through the first hole 101. The locking bolt 64 is then moved inward to engage the engaging portion 641 with the recess 614. The support arms 50 are then positioned and ready to use.

While we have shown and described the embodiment in accordance with the present invention, it should be clear to those skilled in the art that further embodiments may be made without departing from the scope of the present invention.

## Claims

1. A bicycle rack comprising:
a first rod (10) and a second rod (11) whose lower end is pivotably connected to the lower end of the first rod (10);
first and second plates (20, 21) pivotably connected to each other and pivotably connected between the first and second rods (10, 11);
a clamping unit (40) connected to the two respective lower ends of the first and second rods (10, 11), the clamping unit (40) including clamping members (41) on the first and second rods (10, 11) respectively, the clamping members (41) being adapted to clamp a hitch ball (70); and
two support arms (50) respectively connected to the first and second rods (10, 11),
**characterized in that** the clamping unit (40) includes a U-shaped member (42) fixed to the second rod (11) and a U-shaped restriction member (43) having two extension legs thereof pivotably connected to two ends of the U-shaped member (42), a locking member (44) extending through restriction member (43) and connecting the restriction member (43) to the first rod (10), the first rod (10) including a nut (45) connected thereto and the locking member (44) being threadedly connected to the nut (45).

2. A bicycle rack comprising:
a first rod (10) and a second rod (11) whose lower end is pivotably connected to the lower end of the first rod (10);
first and second plates (20, 21) pivotably connected to each other and pivotably connected between the first and second rods (10, 11);
an operation unit (30) including a handle (31);
a clamping unit (40) connected to the two respective lower ends of the first and second rods (10, 11), the clamping unit (40) adapted to clamp a hitch ball (70); and
two support arms (50) respectively connected to the first and second rods (10, 11),
**characterized in that** the handle (31) has a first end connected to the first plate (20), and the operation unit (30) includes an extension (32) connected to a second end of the handle (31) and a space defined between the extension (32) and the first plate (20), an operation pin (33) extending through a part of the extension (32) and a spring (34) mounted to the operation pin (33) and located in the space, the operation pin (33) extending through the first plate (20) and the second plate (21), the operation pin (33) being pulled to be disengaged from the second plate (21) and allowing the first and second plates (20, 21) to be pivotable to each other by lifting the handle (31).

3. A bicycle rack comprising:
a first rod (10) and a second rod (11) whose lower end is pivotably connected to the lower end of the first rod (10);
first and second plates (20, 21) pivotably connected to each other and pivotably connected between the first and second rods (10, 11);
a clamping unit (40) connected to the two respective lower ends of the first and second rods (10, 11), the clamping unit (40) adapted to clamp a hitch ball (70); and
two support arms (50) respectively connected to the first and second rods (10, 11),
**characterized in that** the bicycle rack also comprises two folding units (60) respectively connected to the first and second rods (10, 11) and each folding unit (60) including a mounting member (61) and a resilient member (63), each of the mounting members (61) connected to the support arm (50) corresponding thereto and including two slots (613) defined through two facing sidewalls thereof and a pin (62) extending through the two slots (613) and the first/second rod (10, 11), the two resilient members (63) each being a U-shaped member and including two protrusions (631) on two ends thereof, the two resilient members (63) received in the first and second rods (10, 11) respectively and the protrusions (631) protruding through the first/second rod (10, 11) and the mounting member (61), the two protrusions (631) being pushed inward so as to disengage from the first/second rod (10, 11) and the mounting member (61) such that the support arm (50) is pivotable.

4. The bicycle rack as claimed in claim 1, wherein a center (451) of the nut (45) is located below a center of each of the clamping members (41).

5. The bicycle rack as claimed in claim 2, wherein the handle (31) is a U-shaped arm and the extension (32) is an L-shaped plate which includes a horizontal portion and a vertical portion, the second end of the handle (31) is connected to the horizontal portion and the space is defined between the vertical portion of the extension (32) and the first plate (20), the vertical portion includes a passage (321) and the operation pin (33) extends through the passage (321).

6. The bicycle rack as claimed in claim 5, wherein the operation pin (33) includes a head (331) and a distal end (332), a groove (333) is defined annularly in an outer surface of the operation pin (33), a C-shaped clip (35) is engaged with the groove (333) so that the operation pin (33) is connected between the second plate (21) and the vertical portion of the extension (32).

7. The bicycle rack as claimed in claim 3, wherein the resilient member (63) is a U-shaped member and the two protrusions (631) protrude outward from two outside thereof.

8. The bicycle rack as claimed in claim 7, wherein the mounting member (61) includes a connection hole (611) defined through the two facing sidewalls thereof and each of the first and second rods (10, 11) includes first and second holes (101, 102), the protrusions (631) extend through the connection hole (611) and one of the first and second holes (101, 102).

9. The bicycle rack as claimed in claim 3, wherein the mounting member (61) includes two lugs (612) extend from the two facing sidewalls and the two slots (613) are defined through the two lugs (612), the pin (62) extends through the two slots (613) and the first/second rod (10, 11).

10. The bicycle rack as claimed in claim 3, wherein the mounting member (61) includes a recess (614) defined in the other two facing sidewalls and a locking bolt (64) extends through the first/second rod (10, 11) and engaged with the recess (614) such that the mounting member (61) is not pivotable relative to the first/second rod (10, 11).

11. The bicycle rack as claimed in claim 10, wherein the locking bolt (64) includes a shank and an engaging portion (641) which is engaged with the recess (614).

## Patentansprüche

1. Fahrradträger, umfassend:
eine erste Stange (10) und eine zweite Stange (11), deren unteres Ende drehgelenkig mit dem unteren Ende der ersten Stange (10) verbunden ist;
eine erste und zweite Platte (20, 21), die drehgelenkig miteinander verbunden und drehgelenkig zwischen der ersten und zweiten Stange (10, 11) angeschlossen sind;
eine Klemmeinheit (40), die mit den beiden jeweiligen unteren Enden der ersten und zweiten Stange (10, 11) verbunden ist, wobei die Klemmeinheit (40) Klemmelemente (41) an der ersten beziehungsweise zweiten Stange (10, 11) aufweist, wobei die Klemmelemente (41) so ausgelegt sind, dass sie einen Anhängerkupplungskugelkopf (70) einklemmen; und
zwei Trägerarme (50), die mit der ersten beziehungsweise zweiten Stange (10, 11) verbunden sind,
**dadurch gekennzeichnet, dass** die Klemmeinheit (40) ein U-förmiges Element (42) aufweist, das an der zweiten Stange (11) befestigt ist, und ein U-förmiges Einschränkungselement (43), dessen zwei Verlängerungsschenkel drehgelenkig mit zwei Enden des U-förmigen Elements (42) verbunden sind, ein Arretierelement (44), das durch das Einschränkungselement (43) verläuft und das Einschränkungselement (43) mit der ersten Stange (10) verbindet, wobei die erste Stange (10) eine damit verbundene Mutter (45) aufweist und das Arretierelement (44) geschraubt mit der Mutter (45) verbunden ist.

2. Fahrradträger, umfassend:
eine erste Stange (10) und eine zweite Stange (11), deren unteres Ende drehgelenkig mit dem unteren Ende der ersten Stange (10) verbunden ist;
eine erste und zweite Platte (20, 21), die drehgelenkig miteinander verbunden und drehgelenkig zwischen der ersten und zweiten Stange (10, 11) angeschlossen sind;
eine Bedienungseinheit (30), die einen Griff (31) aufweist;
eine Klemmeinheit (40), die mit den beiden jeweiligen unteren Enden der ersten und zweiten Stange (10, 11) verbunden ist, wobei die Klemmeinheit (40) so ausgelegt ist, dass sie einen Anhängerkupplungskugelkopf (70) einklemmt; und
zwei Trägerarme (50), die mit der ersten beziehungsweise zweiten Stange (10, 11) verbunden sind,
**dadurch gekennzeichnet, dass** der Griff (31) ein erstes Ende aufweist, das mit der ersten Platte (20) verbunden ist, und die Bedienungseinheit (30) ein Ansatzstück (32) aufweist, das mit einem zweiten Ende des Griffs (31) verbunden ist, und wobei ein Zwischenraum zwischen dem Ansatzstück (32) und der ersten Platte (20) definiert ist, ein Bedienungsstift (33) durch ein Teil des Ansatzstücks (32) verläuft, und eine Feder (34) an dem Bedienungsstift (33) montiert ist und sich in dem Zwischenraum befindet, der Bedienungsstift (33) durch die erste Platte (20) und die zweite Platte (21) verläuft, der Bedienungsstift (33) gezogen wird, um von der zweiten Platte (21) gelöst zu werden, und ermöglicht, dass die erste und zweite Platte (20, 21) durch Anheben des Griffs (31) zueinander schwenkbar sind.

3. Fahrradträger, umfassend:
eine erste Stange (10) und eine zweite Stange (11), deren unteres Ende drehgelenkig mit dem unteren Ende der ersten Stange (10) verbunden ist;
eine erste und zweite Platte (20, 21), die drehgelenkig miteinander verbunden und drehgelenkig zwischen der ersten und zweiten Stange (10, 11) angeschlossen sind;
eine Klemmeinheit (40), die mit den beiden jeweiligen unteren Enden der ersten und zweiten Stange (10, 11) verbunden ist, wobei die Klemmeinheit (40) so ausgelegt ist, dass sie einen Anhängerkupplungskugelkopf (70) einklemmt; und
zwei Trägerarme (50), die mit der ersten beziehungsweise zweiten Stange (10, 11) verbunden sind,
**dadurch gekennzeichnet, dass** der Fahrradträger auch zwei Klappeinheiten (60) umfasst, die mit der ersten beziehungsweise zweiten Stange (10, 11) verbunden sind, und wobei jede Klappeinheit (60) ein Montageelement (61) und ein elastisches Element (63) umfasst, jedes der Montageelemente (61) mit dem entsprechenden Trägerarm (50) verbunden ist und zwei Schlitze (613) aufweist, die durch zwei gegenüberliegende Seitenwände davon definiert sind, und ein Stift (62) durch die beiden Schlitze (613) und die erste/ zweite Stange (10, 11) verläuft, die beiden elastischen Elemente (63) jeweils ein U-förmiges Element sind und zwei Vorsprünge (631) an zwei Enden davon aufweisen, die beiden elastischen Elemente (63) in der ersten beziehungsweise zweiten Stange (10, 11) aufgenommen sind und die Vorsprünge (631) durch die erste/ zweite Stange (10, 11) und das Montageelement (61) ragen, wobei die beiden Vorsprünge (631) nach innen gedrückt werden, um sich von der ersten/ zweiten Stange (10, 11) und dem Montageelement (61) zu lösen, sodass der Trägerarm (50) schwenkbar ist.

4. Fahrradträger nach Anspruch 1, wobei ein Mittelpunkt (451) der Mutter (45) unter einem Mittelpunkt von jedem der Klemmelemente (41) angeordnet ist.

5. Fahrradträger nach Anspruch 2, wobei der Griff (31) ein U-förmiger Arm ist und das Ansatzstück (32) eine L-förmige Platte ist, die einen waagerechten Abschnitt und einen senkrechten Abschnitt aufweist, das zweite Ende des Griffs (31) mit dem waagerechten Abschnitt verbunden ist und der Zwischenraum zwischen dem senkrechten Abschnitt des Ansatzstücks (32) und der ersten Platte (20) definiert ist, der senkrechte Abschnitt einen Durchgang (321) aufweist und der Bedienungsstift (33) durch den Durchgang (321) verläuft.

6. Fahrradträger nach Anspruch 5, wobei der Bedienungsstift (33) einen Kopf (331) und ein distales Ende (332) aufweist, eine Nut (333) ringförmig in einer Außenfläche des Bedienungsstifts (33) definiert ist, eine C-förmige Haltevorrichtung (35) mit der Nut (333) in Eingriff steht, sodass der Bedienungsstift (33) zwischen der zweiten Platte (21) und dem senkrechten Abschnitt des Ansatzstücks (32) angeschlossen ist.

7. Fahrradträger nach Anspruch 3, wobei das elastische Element (63) ein U-förmiges Element ist und die beiden Vorsprünge (631) von zwei Außenseiten davon nach außen ragen.

8. Fahrradträger nach Anspruch 7, wobei das Montageelement (61) eine Verbindungsbohrung (611) aufweist, die durch die beiden gegenüberliegenden Seitenwände davon definiert ist, und von der ersten und zweiten Stange (10, 11) jede eine erste und zweite Bohrung (101, 102) aufweist, wobei die Vorsprünge (631) durch die Verbindungsbohrung (611) und eine von der ersten und zweiten Bohrung (101, 102) verlaufen.

9. Fahrradträger nach Anspruch 3, wobei das Montageelement (61) zwei Ansätze (612) aufweist, die von den beiden gegenüberliegenden Seitenwänden aus verlaufen, und die zwei Schlitze (613) durch die beiden Ansätze (612) hindurch definiert sind, der Stift (62) durch die beiden Schlitze (613) und die erste/ zweite Stange (10, 11) verläuft.

10. Fahrradträger nach Anspruch 3, wobei das Montageelement (61) eine Vertiefung (614) aufweist, die in den anderen beiden gegenüberliegenden Seitenwänden definiert ist, und eine Arretierschraube (64) durch die erste/ zweite Stange (10, 11) verläuft und mit der Vertiefung (614) derart in Eingriff steht, dass das Montageelement (61) bezogen auf die erste/ zweite Stange (10, 11) nicht schwenkbar ist.

11. Fahrradträger nach Anspruch 10, wobei die Arretierschraube (64) einen Schaft und einen Eingriffsabschnitt (641) aufweist, der mit der Vertiefung (614) in Eingriff steht.

## Revendications

1. Support à vélo comprenant :
une première tige (10) et une seconde tige (11) dont l'extrémité inférieure est reliée de façon pivotante à l'extrémité inférieure de la première tige (10) ;
des première et seconde plaques (20, 21) reliées de façon pivotante l'une à l'autre et reliées de façon pivotante entre les première et seconde tiges (10, 11) ;
une unité de serrage (40) reliée aux deux extrémités inférieures respectives des première et seconde tiges (10, 11), l'unité de serrage (40) comprenant des éléments de serrage (41) sur les première et seconde tiges (10, 11) respectivement, les éléments de serrage (41) étant aptes à serrer une boule d'attache (70) ; et
deux bras de support (50) reliés respectivement aux première et seconde tiges (10, 11),
**caractérisé par le fait que** l'unité de serrage (40) comprend un élément en forme de U (42) fixé à la seconde tige (11) et un élément de retenue en forme de U (43) ayant deux branches d'extension reliées de façon pivotante aux deux extrémités de l'élément en forme de U (42), un élément de verrouillage (44) s'étendant à travers l'élément de retenue (43) et reliant l'élément de retenue (43) à la première tige (10), la première tige (10) comprenant un écrou (45) relié à celle-ci et l'élément de verrouillage (44) étant relié de façon filetée à l'écrou (45).

2. Support à vélo comprenant :
une première tige (10) et une seconde tige (11) dont l'extrémité inférieure est reliée de façon pivotante à l'extrémité inférieure de la première tige (10) ;
des première et seconde plaques (20, 21) reliées de façon pivotante l'une à l'autre et reliées de façon pivotante entre les première et seconde tiges (10, 11) ;
une unité d'actionnement (30) comprenant une poignée (31) ;
une unité de serrage (40) reliée aux deux extrémités inférieures respectives des première et seconde tiges (10, 11), l'unité de serrage (40) étant apte à serrer une boule d'attache (70) ; et
deux bras de support (50) reliés respectivement aux première et seconde tiges (10, 11),
**caractérisé par le fait que** la poignée (31) a une première extrémité reliée à la première plaque (20), et l'unité d'actionnement (30) comprend une extension (32) reliée à une seconde extrémité de la poignée (31) et un espace défini entre l'extension (32) et la première plaque (20), une broche d'actionnement (33) s'étendant à travers une partie de l'extension (32) et un ressort (34) monté au niveau de la broche d'actionnement (33) et placé dans l'espace, la broche d'actionnement (33) s'étendant à travers la première plaque (20) et la seconde plaque (21), la broche d'actionnement (33) étant tirée pour être désengagée de la seconde plaque (21) et permettant aux première et seconde plaques (20, 21) de pouvoir être pivotées l'une vers l'autre par soulèvement de la poignée (31).

3. Support à vélo comprenant :
une première tige (10) et une seconde tige (11) dont l'extrémité inférieure est reliée de façon pivotante à l'extrémité inférieure de la première tige (10) ;
des première et seconde plaques (20, 21) reliées de façon pivotante l'une à l'autre et reliées de façon pivotante entre les première et seconde tiges (10, 11) ;
une unité de serrage (40) reliée aux deux extrémités inférieures respectives des première et seconde tiges (10, 11), l'unité de serrage (40) étant apte à serrer une boule d'attache (70) ; et
deux bras de support (50) reliés respectivement aux première et seconde tiges (10, 11),
**caractérisé par le fait que** le support à vélo comprend également deux unités de pliage (60) reliées respectivement aux première et seconde tiges (10, 11) et chaque unité de pliage (60) comprenant un élément de montage (61) et un élément élastique (63), chacun des éléments de montage (61) étant relié au bras de support (50) correspondant à celui-ci et comprenant deux fentes (613) définies à travers deux parois latérales se faisant face et une broche (62) s'étendant à travers les deux fentes (613) et la première/seconde tige (10, 11), les deux éléments élastiques (63) étant chacun un élément en forme de U et comprenant deux saillies (631) sur leurs deux extrémités, les deux éléments élastiques (63) étant reçus dans les première et seconde tiges (10, 11) respectivement et les saillies (631) faisant saillie à travers la première/seconde tige (10, 11) et l'élément de montage (61), les deux saillies (631) étant poussées vers l'intérieur de façon à se désengager de la première/seconde tige (10, 11) et de l'élément de montage (61) de telle sorte que le bras de support (50) est apte à être pivoté.

4. Support à vélo selon la revendication 1, dans lequel un centre (451) de l'écrou (45) est situé sous un centre de chacun des éléments de serrage (41).

5. Support à vélo selon la revendication 2, dans lequel la poignée (31) est un bras en forme de U et l'extension (32) est une plaque en forme de L qui comprend une partie horizontale et une partie verticale, la seconde extrémité de la poignée (31) est reliée à la partie horizontale et l'espace est défini entre la partie verticale de l'extension (32) et la première plaque (20), la partie verticale comprend un passage (321) et la broche d'actionnement (33) s'étend à travers le passage (321).

6. Support à vélo selon la revendication 5, dans lequel la broche d'actionnement (33) comprend une tête (331) et une extrémité distale (332), une rainure (333) est définie de façon annulaire dans une surface extérieure de la broche d'actionnement (33), une attache en forme de C (35) est engagée avec la rainure (333) de telle sorte que la broche d'actionnement (33) est reliée entre la seconde plaque (21) et la partie verticale de l'extension (32).

7. Support à vélo selon la revendication 3, dans lequel l'élément élastique (63) est un élément en forme de U et les deux saillies (631) font saillie vers l'extérieur à partir des deux côtés extérieurs de celui-ci.

8. Support à vélo selon la revendication 7, dans lequel l'élément de montage (61) comprend un trou de connexion (611) défini à travers les deux parois latérales se faisant face et chacune des première et seconde tiges (10, 11) comprend des premier et second trous (101, 102), les saillies (631) s'étendent à travers le trou de connexion (611) et l'un des premier et second trous (101, 102).

9. Support à vélo selon la revendication 3, dans lequel l'élément de montage (61) comprend deux tenons (612) qui s'étendent à partir des deux parois latérales se faisant face et les deux fentes (613) sont définies à travers les deux tenons (612), la broche (62) s'étend à travers les deux fentes (613) et la première/seconde tige (10, 11).

10. Support à vélo selon la revendication 3, dans lequel l'élément de montage (61) comprend une cavité (614) définie dans les deux autres parois latérales se faisant face et un boulon de verrouillage (64) s'étend à travers la première/seconde tige (10, 11) et est engagé avec la cavité (614) de telle sorte que l'élément de montage (61) ne peut pas être pivoté par rapport à la première/seconde tige (10, 11).

11. Support à vélo selon la revendication 10, dans lequel le boulon de verrouillage (64) comprend une tige et une partie d'engagement (641) qui est engagée avec la cavité (614).
